(19) Europäisches Patentamt
European Patent Office
Office européen des brevets

(11) **EP 3 682 755 A1**

(12) **EUROPEAN PATENT APPLICATION**
published in accordance with Art. 153(4) EPC

(43) Date of publication:
**22.07.2020 Bulletin 2020/30**

(51) Int Cl.:
***A44B 19/16*** *(2006.01)* ***B65D 30/02*** *(2006.01)*
***B65D 33/25*** *(2006.01)*

(21) Application number: **18856181.5**

(22) Date of filing: **13.09.2018**

(86) International application number:
**PCT/JP2018/034044**

(87) International publication number:
**WO 2019/054453 (21.03.2019 Gazette 2019/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.09.2017 JP 2017178353**

(71) Applicant: **Kyodo Printing Co., Ltd.**
**Tokyo 112-8501 (JP)**

(72) Inventors:
• **ATSUCHI, Yoshiyuki**
**Tokyo 112-8501 (JP)**
• **OSAWA, Azusa**
**Tokyo 112-8501 (JP)**
• **KIMURA, Saori**
**Tokyo 112-8501 (JP)**

(74) Representative: **Krauns, Christian**
**Wallinger Ricker Schlotter Tostmann**
**Patent- und Rechtsanwälte Partnerschaft mbB**
**Zweibrückenstraße 5-7**
**80331 München (DE)**

(54) **FASTENER TAPE**

(57) This fastener tape 100 comprises a first belt-shaped member 10 and a second belt-shaped member 20 that are engageable with each other, the first and second belt-shaped members being constituted with a resin composition containing an ethylene-vinyl alcohol copolymer and an acid-modified polyolefin resin.

FIG. 1

(a)

(b)

**Description**

FIELD

The present invention relates to a fastener tape (zipper tape).

BACKGROUND

Packaging bags provided with fastener tape are widely used as a means of sealing contents such as food. Packaging bags with fastener tape are useful since they can be resealed after having been opened.

The product value of contents enclosed in a packaging bag with fastener tape are influenced by volatile components such as aromatic components contained therein. In such cases, the packaging bag with fastener tape is required to not adsorb these components. Various means have been proposed to satisfy this requirement.

PTL1 discloses a fastener tape comprised of an ethylene-vinyl alcohol copolymer and a packaging bag having a fastener tape comprising an ethylene-vinyl alcohol copolymer layer for the innermost layer and an ethylene-vinyl alcohol copolymer for the opening.

PTL2 discloses a fastener tape joined to the inner surface of a packaging bag having a plastic innermost layer, wherein the fastener tape is provided with a pair of plastic linear members having a strip-like interlocking engageable structure and a pair of plastic strip-like sheets in which this pair of linear members is attached in the lengthwise direction on opposing surfaces, and the strip-like sheets are provided with a substrate film capable of joining with the inner surface of the packaging bag and a first fusing resin layer formed over the entire surface on the side opposing this substrate film.

[CITATION LIST]

[PATENT LITERATURE]

PTL1: JP H3-289401 A
PTL2: JP 2012-158378 A

SUMMARY

[TECHNICAL PROBLEM]

Although ethylene-vinyl alcohol copolymers have superior non-adsorbency, they have the shortcomings of inadequate flexibility and heat sealability. Thus, in the case of fabricating a fastener tape made of an ethylene-vinyl alcohol copolymer and a packaging bag with fastener tape using a film made of an ethylene-vinyl alcohol copolymer as in PTL1, although non-adsorbency is obtained, the packaging bag cannot be opened easily due to inadequate flexibility. In this packaging bag with fastener tape, as a result of being unable to obtain adequate heat sealability between the fastener tape and film, the fused portion between the fastener tape and film is unable to withstand the engaging strength of the fastener tape, thereby causing the fastener tape to detach when opening.

Even in the case of using the fastener tape described in PTL2 by adhering to a packaging bag made of an ethylene-vinyl alcohol copolymer, since the fastener tape portion lacks non-adsorbency, adequate non-adsorbency is unable to be obtained for the entire packaging bag.

Therefore, there is a need to provide a fastener tape that can be fused with adequate strength to a non-adsorbent packaging bag, is non-adsorbent with respect to aromatic components, and is able to demonstrate favorable openability.

[SOLUTION TO PROBLEM]

As a result of conducting extensive studies, the inventors of the present invention found that the aforementioned problems can be solved by the means indicated below, thereby leading to completion of the present invention. Namely, the present invention is as indicated below.

<Aspect 1>

A fastener tape comprised of first and second strip-like members that can be mutually engaged; wherein the first and second strip-like members are composed with a resin composition containing an ethylene-vinyl alcohol copolymer and an acid-modified polyolefin-based resin.

<Aspect 2>

The fastener tape according to Aspect 1, wherein the resin composition contains 65-95mass% of an ethylene-vinyl alcohol copolymer and 5-35mass% of an acid-modified polyolefin-based resin.

<Aspect 3>

The fastener tape according to Aspect 1 or 2, wherein the content of ethylene monomer unit in the ethylene-vinyl alcohol copolymer is 10-70 mol% based on the total number of moles of the ethylene monomer unit and vinyl alcohol monomer unit in the entire ethylene-vinyl alcohol copolymer.

<Aspect 4>

The fastener tape according to any one of Aspects 1 to 3, wherein the melt mass flow rate of the resin composition as determined in compliance with JIS K7210-1 is 1.0 g/10 min or more under conditions of a temperature of 260°C and load of 21.18 N.

<Aspect 5>

The fastener tape according to any one of Aspects 1 to 4, wherein when the resin composition is molded into a film, cut to a size of 10 cm $\times$ 10 cm, one surface is exposed for one week to L-menthol vapor in an environment at 40°C, the adsorbed L-menthol is extracted with methyl ethyl ketone, and the amount of L-menthol in the extract is quantified by gas chromatography, the adsorbed amount of L-menthol in the film is 0.7 mg or less.

<Aspect 6>

A packaging bag with fastener tape provided with:

a packaging bag composed with a packaging bag film provided with a non-adsorbent layer, containing an ethylene-vinyl alcohol copolymer, for the innermost layer, and
the fastener tape according to any one of Aspects 1 to 5 fused to the non-adsorbent layer so that the first and second strip-like members are mutually opposing.

<Aspect 7>

A method for producing a packaging bag with fastener tape using:

a fastener tape comprised of first and second strip-like members that can be mutually engaged, wherein the first and second strip-like members are composed with a resin composition containing an ethylene-vinyl alcohol copolymer and an acid-modified polyolefin-based resin, and
a packaging bag film provided with a non-adsorbent layer containing an ethylene-vinyl alcohol copolymer, the method including:

fusing the fastener tape to the non-adsorbent layer, and
fusing the ends of the non-adsorbent layer by mutually opposing to form a bag such that the first and second strip-like members of the fastener tape are mutually opposing; wherein,
when forming a bag by fusing the ends of the non-adsorbent layer by mutually opposing, at least a portion of the fastener tape is integrally fused and collapsed together with the ends of the non-adsorbent layer between the mutually opposing ends of the non-adsorbent layer.

[ADVANTAGEOUS EFFECTS OF INVENTION]

According to the present invention, a fastener tape can be provided, the fastener tape being able to be fused with adequate strength to a non-adsorbent packaging bag, being non-adsorbent with respect to aromatic components, and being able to demonstrate favorable openability.

BRIEF DESCRIPTION OF DRAWINGS

FIG. 1 depicts drawings indicating one aspect of the fastener tape of the present invention.

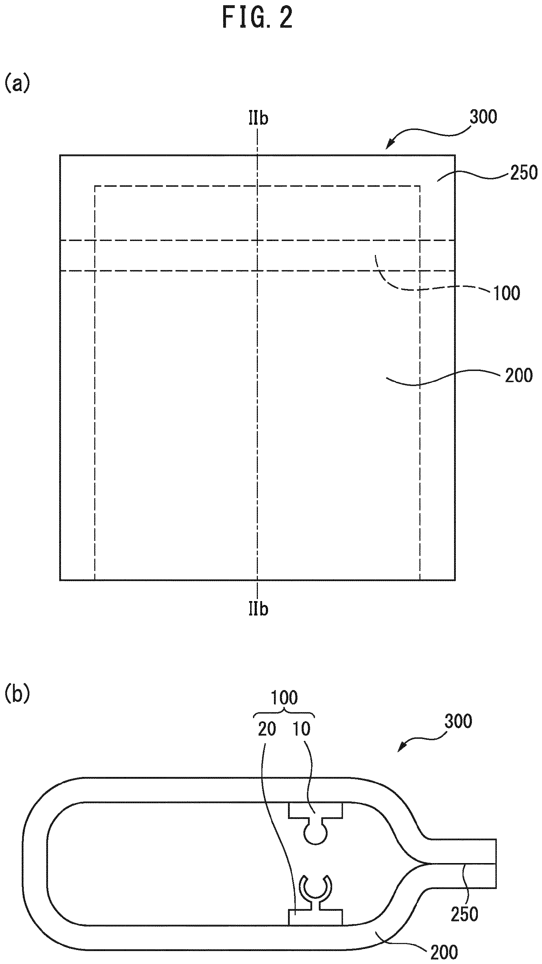

FIG. 2 depicts drawings indicating one aspect of a packaging bag with fastener tape of the present invention.
FIG. 3 depicts drawings indicating each step of one aspect of the method of the present invention for manufacturing a packaging bag with fastener tape.

DESCRIPTION OF EMBODIMENTS

«Fastener Tape»

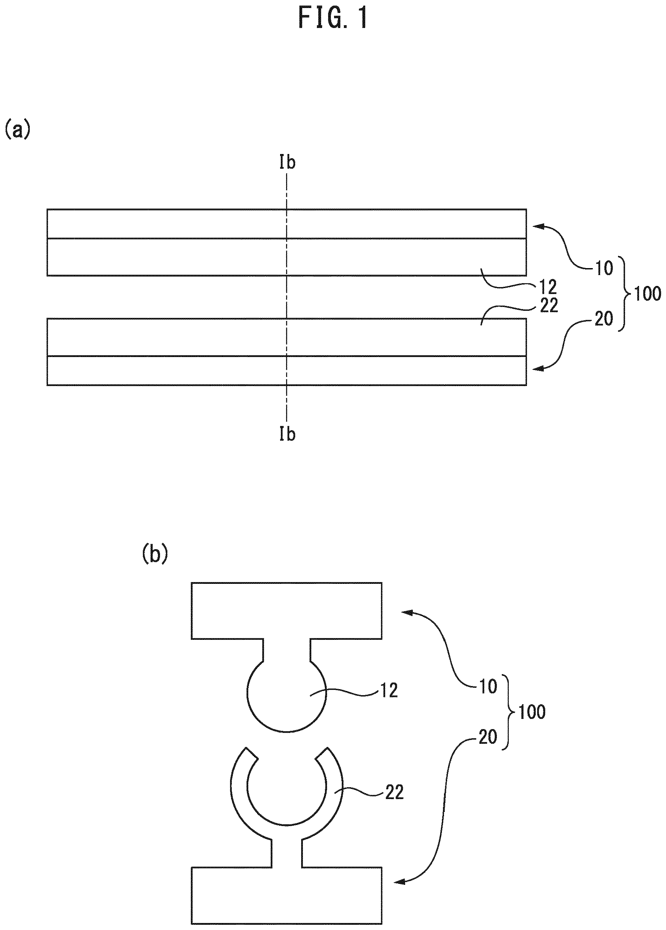

As shown in FIG. 1, the fastener tape 100 of the present invention is a fastener tape comprised of a first strip-like member 10 and a second strip-like member 20 that can be mutually engaged. In one aspect of the fastener tape of the present invention, the first strip-like member 10 has an engageable portion 12 and the second strip-like member 20 has an engageable portion 22.
The first and second strip-like members are composed with a resin composition containing an ethylene-vinyl alcohol copolymer (EVOH) and an acid-modified polyolefin-based resin.
According to the aforementioned composition, a fastener tape can be provided, the fastener tape being able to be fused with adequate strength to a non-adsorbent packaging bag, and particularly a packaging bag provided with a layer containing an ethylene-vinyl alcohol copolymer for the innermost layer thereof, being non-adsorbent with respect to an aromatic component, and demonstrating favorable flexibility after molding as a result of having suitable flexibility.
Examples of aromatic components include menthol, limonene, methyl salicylate, camphor and tocopherol, etc.
The following provides an explanation of each constituent of the present invention.

<First and Second Strip-Like Members>

The first and second strip-like members are a pair of members that can be mutually engaged. The first and second strip-like members are composed with the resin composition described below.
As shown in FIG. 1, for example, the first strip-like member 10 and the second strip-like member 20 respectively have the engageable portion 12 and the engageable portion 22. In this aspect, the surface of the engageable portion 12 of the first strip-like member 10 and the surface of the engageable portion 22 of the second strip-like member 20 are each surfaces that fuse with the packaging bag.

(Resin Composition)

The resin composition composing the first and second strip-like members contains EVOH and an acid-modified polyolefin-based resin.
The content of EVOH can be 60mass% or more, 65mass% or more, 70mass% or more, 75mass% or more, 80mass% or more or 82mass% or more, and 95mass% or less, 93mass% or less or 90mass% or less. This content being 65mass% or more, 70mass% or more, 75mass% or more, 80mass% or more or 82mass% or more and 90mass% or less is preferable from the viewpoint of realizing both favorable heat sealing strength with the non-adsorbent packaging bag and favorable non-adsorbency.
The content of the acid-modified polyolefin-based resin can be 5mass% or more, 7mass% or more or 10mass% or more, and 40mass% or less, 35mass% or less, 30mass% or less, 25mass% or less, 20mass% or less or 18mass% or less. This content being 10mass% or more and 35mass% or less, 30mass% or less, 25mass% or less, 20mass% or less or 18mass% or less is preferable from the viewpoint of realizing both favorable heat sealing strength with the non-adsorbent packaging bag and favorable non-adsorbency. As a result of having the aforementioned content, suitable flexibility can be imparted to the resin and favorable openability can be demonstrated when molded into a fastener tape, thereby making this preferable.
The melt mass flow rate of the resin composition as determined in compliance with JIS K7210-1 being 1.0 g/10 min or more under conditions of a temperature of 260°C and load of 21.18 N is preferable from the viewpoint of enabling at least a portion of the fastener tape to be integrally fused and collapsed between the mutually opposing ends of the innermost layer of the packaging bag, and particularly between the mutually opposing ends of a non-adsorbent layer of a non-adsorbent packaging bag, thereby resulting in favorable sealing performance of the packaging bag. This melt mass flow rate can be 1.0 g/10 min or more, 2.0 g/10 min or more or 3.0 g/10 min or more and 100 g/10 min or less, 80 g/10 min or less, 60 g/10 min or less, 50 g/10 min or less, 40 g/10 min or less, 30 g/10 min or less, 25 g/10 min or less, 20 g/10 min or less, 15 g/10 min or less or 10 g/10 min or less.

This MFR may be determined by directly measuring the weight of an extrudate extruded for 10 minutes in compliance with Method A of JIS K7210-1, or by measuring the volume of an extrudate extruded for 10 minutes followed by calculating the weight of the extrudate using the density of the extrudate in compliance with Method B.

The resin composition having the aforementioned composition can have high non-adsorbency. More specifically, when this resin composition is molded into a film, cut to a size of 10 cm × 10 cm, one surface is exposed for one week to L-menthol vapor in an environment at 40°C, the adsorbed L-menthol is extracted with methyl ethyl ketone, and the amount of adsorbed L-menthol in the extract is quantified by gas chromatography, the adsorbed amount of L-menthol in this film can be 0.7 mg or less. This adsorbed amount of L-menthol can be 0.6 mg or less, 0.5 mg or less, 0.4 mg or less, 0.3 mg or less or 0.2 mg or less and 0 mg or more, 0.001 mg or more, 0.005 mg or more, 0.010 mg or more or 0.020 mg or more.

(Resin Composition: Ethylene-Vinyl Alcohol Copolymer (EVOH))

EVOH can be generally be obtained by saponifying an ethylene-vinyl ester copolymer. EVOH makes it possible to provide the fastener tape with non-adsorbency with respect to aromatic components.

The content of ethylene monomer unit in the EVOH can be 10 mol% or more, 15 mol% or more, 20 mol% or more, 25 mol% or more, 30 mol% or more or 35 mol% or more and 70 mol% or less, 60 mol% or less, 55 mol% or less, 50 mol% or less or 45 mol% or less based on the total number of moles of ethylene monomer unit and vinyl alcohol monomer unit in the entire EVOH.

EVOH can be generally be obtained by saponifying an ethyl-vinyl ester copolymer. In this case, the degree of saponification of the vinyl ester unit of the EVOH can be 90 mol% or more, 95 mol% or more, 99 mol% or more or 100 mol%. If the degree of saponification is high, crystallization occurs easily, gas impermeability increases and thermal stability during melting improves. Thus, a higher degree of saponification is generally preferable.

A typical example of a vinyl ester is vinyl acetate and other examples include vinyl esters such as vinyl propionate, vinyl pivalate, vinyl valerate, vinyl caprate and vinyl benzoate. One type of these vinyl esters may be used or two or more types may be used as a mixture.

A mixture of EVOH, for which at least one of ethylene content, degree of saponification and degree of polymerization differ, may be used as EVOH. The EVOH may contain other copolymer components within a range that does not impair the object of the present invention. A plurality of types of these EVOH may be used in combination.

(Resin Composition: Acid-Modified Polyolefin-Based Resin)

The acid-modified polyolefin-based resin can be obtained by graft polymerization of an acid to a polyolefin. The acid-modified polyolefin-based resin is able to impart the fastener tape with fusibility to the packaging bag. Maleic anhydride-modified polyolefin, for example, is used for the acid-modified polyolefin-based resin.

Polyethylene (including low density polyethylene (LDPE), linear low density polyethylene (LLDPE), ultra-low density polyethylene (ULDPE), medium density polyethylene and high density polyethylene (HDPE) or polypropylene (including polypropylene (PP), homopolymer polypropylene (homo PP), random polypropylene (random PP) and block polypropylene (block PP) is preferably used as the polyolefin.

A plurality of types of acid-modified polyolefin-based resin may be used in combination.

For example, maleic anhydride-modified polyolefin obtained by graft polymerizing 0.05 mass parts or more, 0.1 mass parts or more, 0.3 mass parts or more, 0.5 mass parts or more or 1.0 mass part or more and 50 mass parts or less, 30 mass parts or less, 20 mass parts or less, 10 mass parts or less or 5.0 mass parts or less of maleic anhydride to 100 mass parts of polyolefin can be used for the maleic anhydride-modified polyolefin. Examples of this maleic anhydride-modified polyolefin are described in JP H9-278956 A.

<<Packaging Bag with Fastener Tape>>

The packaging bag with fastener tape is provided with a packaging bag, provided with a non-adsorbent layer containing an ethylene-vinyl alcohol copolymer as the innermost layer thereof, and the aforementioned fastener tape fused to the non-adsorbent layer of the packaging bag such that first and second strip-like members are mutually opposed.

The packaging bag with fastener tape having the aforementioned composition is able to demonstrate favorable non-adsorbency as a whole packaging bag since both non-adsorbency of the fastener tape and non-adsorbency of the packaging bag can be realized.

<Packaging Bag>

The packaging bag is provided with a non-adsorbent layer containing an ethylene-vinyl alcohol copolymer as the innermost layer.

This packaging bag is composed with a packaging bag film at least provided with a non-adsorbent layer. This packaging bag film may also further be provided with an optional substrate layer.

(Non-Adsorbent Layer)

The non-adsorbent layer contains an ethylene-vinyl alcohol copolymer. An ethylene-vinyl alcohol copolymer listed as an example relating to the fastener tape can be used for the ethylene-vinyl alcohol copolymer.

The non-adsorbent layer further containing an acid-modified polyolefin-based resin is preferable from the viewpoint of resulting in more preferable fusibility with the fastener tape. An acid-modified polyolefin-based resin listed as an example relating to the fastener tape can be used for the acid-modified polyolefin-based resin.

(Substrate Layer)

The substrate layer is laminated onto the non-adsorbent layer in the packaging bag film. This substrate layer imparts suitable stiffness to the non-adsorbent layer and impermeability that prevents the entrance of moisture or chlorine and the like from the outside, thereby making this preferable.

A substrate layer made from polyolefin, polyvinyl chloride, polyvinylidene chloride, polychlorotrifluoroethylene, polytetrafluoroethylene, saturated or unsaturated polyester (such as polyethylene terephthalate (PET) or polybutylene terephthalate), polyamide, polyacrylonitrile or a combination thereof can be used as this substrate layer. A substrate layer made from these materials may be used as a single layer or laminated. A barrier layer such as pure aluminum foil, aluminum alloy foil or an alumina or silica deposited film may also be laminated for the purpose of enhancing impermeability.

(Other Layers)

The packaging bag film may also optionally have other layers. An example of other layers includes adhesive layers present between each layer.

<<Method for Producing Packaging Bag with Fastener Tape>>

The method of the present invention for producing a packaging bag with fastener tape includes a fusion step for fusing the aforementioned fastener tape to the non-adsorbent layer of the aforementioned packaging bag film, and a bag formation step for forming a bag by mutually opposing and fusing the ends of the non-adsorbent layer such that the first and second strip-like members of the fastener tape are mutually opposed.

When forming into a bag by mutually opposing and fusing the ends of the non-adsorbent layer, at least a portion of the fastener tape is integrally fused and collapsed together with the ends of the non-absorbent layer between the mutually opposing ends of the non-adsorbent layer.

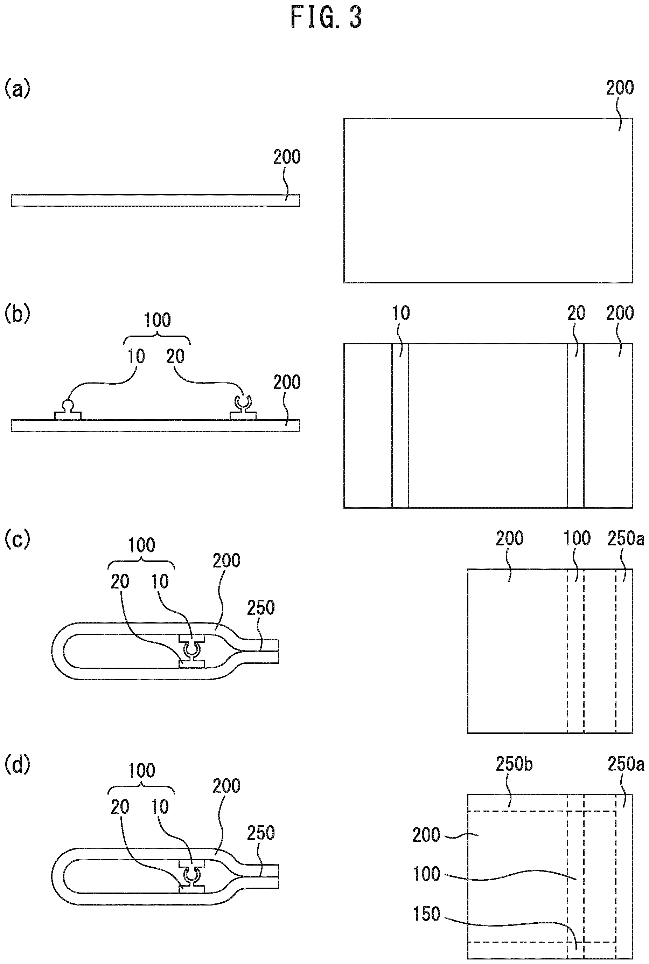

The following provides an explanation of each step of the method of the present invention for producing a packaging bag with fastener tape with reference to FIG. 3. Although an aspect in which the packaging bag is a bag that is sealed on three sides is described in FIG. 3, the packaging bag may be that which is sealed on four sides.

(Fusion Step)

The fusion step is a step for fusing the aforementioned fastener tape to the non-adsorbent layer of the aforementioned packaging bag film.

This step can be carried out by, for example, preparing a packaging bag film provided with a non-adsorbent layer 200 as shown in FIG. 3(a), followed by fusing the first strip-like member 10 and the second strip-like member 20 to the non-adsorbent layer 200 of the packaging bag film as shown in FIG. 3(b).

Fusion of the fastener tape may be carried out separately from molding of the fastener tape or may be carried out simultaneous to molding of the fastener tape. In the case of attempting to fabricate a packaging bag that is sealed on four sides in particular, the first and second strip-like members may each be fused to different packaging bag films.

(Bag Formation Step)

The bag formation step is a step for forming a bag by mutually opposing and fusing the ends of the non-adsorbent layer such that the first and second strip-like members of the fastener tape are mutually opposed.

This step can be carried out by, for example, mutually opposing the ends of the non-adsorbent layer 200 such that the first strip-like member 10 and the second strip-like member 20 of the fastener tape 100 are mutually opposed, and particularly such that the first strip-like member 10 and the second strip-like member 20 mutually engage as shown in FIG. 3(c), and forming a bag by fusing the ends of the non-adsorbent layer 200 at a sealing portion 250 as shown in FIG. 3(d). When forming a bag by opposing and fusing the ends of the non-adsorbent layer 200, for example, a portion of the fastener tape 100 at a region 150 where the fastener tape 100 overlaps with the ends can be integrally fused and collapsed together with the ends of the non-adsorbent layer 200 between the mutually opposing ends of the non-adsorbent layer 200.

EXAMPLES

Although the following provides a detailed explanation of the present invention using examples and comparative examples, the present invention is not limited thereto.

<<Production of Resin Composition>>

<Example 1>

The resin composition of Example 1 was prepared by melt kneading EVOH (EVAL, sold by Kuraray, ethylene monomer unit content: 44 mol%) and maleic anhydride-modified polyolefin (ADMER, sold by Mitsui Chemicals) with a high shear twin screw extruder at a weight ratio of 88:12.

<Examples 2 to 4 and Comparative Example 1>

The resin compositions of Examples 2 to 4 and Comparative Example 1 were prepared in the same manner as Example 1 with the exception of changing the weight ratio of the EVOH and maleic anhydride-modified polyolefin as shown in Table 1.

<Examples 5 to 8 and Comparative Example 2>

The resin compositions of Examples 5 to 8 and Comparative Example 2 were respectively prepared in the same manner as Examples 1 to 4 and Comparative Example 1 with the exception of using EVOH having an ethylene monomer unit content of 48 mol% (EVAL, sold by Kuraray) instead of EVOH having an ethylene monomer unit content of 44 mol%.

<Comparative Example 3>

The resin composition of Comparative Example 3 was prepared in the same manner as Example 1 with the exception of using low density polyethylene instead of EVOH and maleic anhydride-modified polyolefin.

<<Evaluation of Properties of Resin Compositions>>

<Melt Mass Flow Rate>

The melt mass flow rates (MFR) of the prepared resin compositions of Examples 1 to 8 and Comparative Examples 1 to 3 determined in compliance with Method A of JIS K7210-1 were measured under conditions of a temperature of 260°C and load of 21.18 N.

<Tensile Modulus>

Evaluation films having a thickness of 100 $\mu$m were formed with a single layer film forming machine using the prepared resin compositions.
The formed evaluation films were cut to a width of 15 mm followed by measurement of tensile modulus using a tensile tester under conditions of a tensile speed of 300 mm/min.

<Sealing Strength>

Evaluation films were first formed as explained in relation to evaluation of tensile modulus.

The evaluation films formed in the manner described above were heat sealed under conditions of 160°C, 0.2 MPa and 0.5 sec on the side of the non-adsorbent layer of a packaging bag film provided with a non-adsorbent layer, aluminum foil as a substrate layer and PET film in that order (Non-catch, sold by Kyodo Printing).

Next, the heat-sealed evaluation films and packaging bag film were cut to a width of 15 mm followed by measurement of heat sealing strength by a T peel test using a tensile tester under conditions of a tensile speed of 300 mm/min.

<Adsorbed Amount of L-Menthol>

Evaluation films were first formed as explained in relation to evaluation of tensile modulus.

The evaluation films formed in the manner described above were cut to a size of 10 cm × 10 cm, placed in a covered Petri dish having a diameter of 14 cm and depth of 2 cm together with 1 g of L-menthol and exposed to L-menthol vapor (3.25 mg/cm$^3$) for 1 week in an atmosphere at 40°C, followed by extracting the L-menthol adsorbed to the film following exposure with methyl ethyl ketone and calculating the adsorbed amount of L-menthol by quantifying the amount of L-menthol in the extract solution by gas chromatography.

<<Evaluation of Fastener Tape>>

Fastener tape having an interlocking engageable structure in which the thickness of the flange portions was about 100 μm at a width of 1.3 cm was fabricated by profile melt extrusion using the resin composition prepared in Example 1. Fastener tape was molded into the same form as Example 1 for the other examples and comparative examples. Fastener tape was able to be molded for each of the samples.

Next, packaging bags measuring 9 cm × 17 cm were prepared according to the method previously described in relation to FIG. 3 using the aforementioned fastener tape and the aforementioned packaging bag film followed by evaluation of the parameters indicated below.

<Appearance>

The appearance of the region on the side of the packaging bag where the fastener tape is collapsed was observed by visual inspection. The evaluation criteria were as indicated below.

good: Collapsed favorably
bad: Convexed

<Openability>

Evaluation of openability of the prepared fastener bag was carried out by a sensory evaluation. The evaluation criteria were as indicated below.

good: Able to be opened easily
bad: Not able to be opened easily

The results are shown in the following Table 1. With respect to "MFR" in Table 1, a value of "≥20.0" indicates that an accurate value was unable to be measured as a result of MFR having exceeded 20.

[Table 1]

| | Composition | | | | Composition Evaluations | | | | Packaging Bag Evaluations | |
|---|---|---|---|---|---|---|---|---|---|---|
| | EVOH | | Acid-Modified PO | PE | MFR (g/ 10min) 260°C | Tensile Modulus (N/mm$^2$) | Sealing Strength (N/ 15mm) 160°C | Adsorbed Amount (mg/ 100cm$^2$) | Appearance of Collapsed Portion | Openability |
| | Content in Composition (mass%) | Ethylene Monomer Unit Content (mol%) | Content in Composition (mass%) | Content in Composition (mass%) | | | | | | |
| Ex.1 | 88 | 44 | 12 | - | 5.40 | 835.3 | 23.7 | 0.03 | good | good |
| Ex.2 | 80 | 44 | 20 | - | 3.33 | 693.1 | 22.1 | 0.09 | good | good |
| Ex.3 | 70 | 44 | 30 | - | 2.07 | 529.7 | 20.1 | 0.16 | good | good |
| Ex.4 | 60 | 44 | 40 | - | 0.49 | 413.9 | 22.4 | 0.57 | bad | good |
| Ex.5 | 88 | 48 | 12 | - | ≥20.0 | 843.2 | 22.0 | 0.10 | good | good |
| Ex.6 | 80 | 48 | 20 | - | ≥20.0 | 757.5 | 20.0 | 0.17 | good | good |
| Ex.7 | 70 | 48 | 30 | - | ≥20.0 | 597.6 | 24.1 | 0.13 | good | good |
| Ex.8 | 60 | 48 | 40 | - | ≥20.0 | 547.5 | 24.1 | 0.22 | good | good |
| Comp.Ex. 1 | 100 | 44 | - | - | 11.3 | 1101.2 | 16.1 | 0.02 | good | bad |
| Comp.Ex. 2 | 100 | 48 | - | - | ≥20.0 | 1230.6 | 18.0 | 0.20 | good | bad |
| Comp.Ex. 3 | - | - | - | 100 | 5.44 | 281.2 | (unsealable) | 14.3 | good | good |

It can be understood from Table 1 that the fastener tape prepared using the resin compositions of Examples 1 to 8 are able to be fused with sufficient strength so as to withstand opening of the packaging bag, have non-adsorbency with respect to aromatic components, and demonstrate favorable openability.

Among these, packaging bags with fastener tape prepared using the resin compositions of Examples 1 to 3 and Example 5 to 8, in which MFR was 1.0 or more, can be understood to allow the obtaining of favorable sealability as a result of being able to be favorably collapsed during bag production.

<Evaluated Values of L-Menthol Adsorption by Packaging Bags with Fastener Tape>

The amounts of L-menthol adsorbed for an entire packaging bag with fastener tape of a prescribed size were estimated using the amount of L-menthol adsorbed by the resin compositions as previously described.

Estimation was carried out by assuming use of the packaging bag with fastener tape indicated below.

Size of portion housing contents: 10 cm × 15 cm
Fastener tape: 10 cm long × 1.3 cm wide

A region corresponding to a width of 0.65 cm equal to half of the width of 1.3 cm of the aforementioned fastener tape was assumed to make contact with the contents of the packaging bag.

The areas of the portion of the fastener tape in the packaging bag and the region of the non-adsorbent layer of the packaging bag that contacts the contents were as indicated below.

Fastener tape: 0.65 cm × 20 cm = 13 cm$^2$
Non-adsorbent layer of packaging bag: 14.35 cm × 20 cm = 287 cm$^2$

The adsorbed amount of L-menthol for the entire packaging bag was calculated using the aforementioned values and the adsorbed amount of L-menthol of the resin composition.

$$\text{Amount adsorbed by fastener tape (mg)} = \text{non-adsorbency of fastener tape (mg/100 cm}^2)$$
$$\times$$
$$\text{area of fastener tape portion (cm}^2)/100$$

$$\text{Amount adsorbed by non-adsorbent layer (mg)} = \text{non-adsorbency of non-adsorbent layer}$$
$$\text{(mg/100 cm}^2) \times \text{area of non-adsorbent layer portion (cm}^2)/100$$

$$\text{Total adsorbed amount (mg)} = \text{Amount adsorbed by fastener tape (mg)} + \text{amount adsorbed}$$
$$\text{by non-adsorbent layer (mg)}$$

Non-adsorbency of the non-adsorbent layer was evaluated in the same manner as the aforementioned non-adsorbency of the resin compositions.

The results of the calculations are shown in the following Table 2.

[Table 2]

| | Fastener Tape Non-adsorbency (mg/100cm²) | Non-adsorbent Layer Non-adsorbency (mg/100cm²) | Amount Adhered by Fastener Tape (mg) | Amount Adhered by Non-adsorbent Layer (mg) | Total Amount Adsorbed (mg) | Evaluation of Packaging Bag | |
|---|---|---|---|---|---|---|---|
| | | | | | | Appearance of Collapsed Portion | Fastener Tape Openability |
| (Absence of Fastener Tape) | - | 0.02 | - | 0.060 | 0.060 | - | - |
| Ex.1 | 0.03 | 0.02 | 0.004 | 0.057 | 0.061 | good | good |
| Ex.2 | 0.09 | 0.02 | 0.012 | 0.057 | 0.069 | good | good |
| Ex.3 | 0.16 | 0.02 | 0.020 | 0.057 | 0.078 | good | good |
| Ex.4 | 0.57 | 0.02 | 0.074 | 0.057 | 0.131 | bad | good |
| Ex. 5 | 0.10 | 0.02 | 0.013 | 0.057 | 0.071 | good | good |
| Ex.6 | 0.17 | 0.02 | 0.022 | 0.057 | 0.079 | good | good |
| Ex.7 | 0.13 | 0.02 | 0.017 | 0.057 | 0.074 | good | good |
| Ex.8 | 0.22 | 0.02 | 0.029 | 0.057 | 0.086 | good | good |
| Comp.Ex. 1 | 0.02 | 0.02 | 0.003 | 0.057 | 0.060 | good | bad |
| Comp.Ex. 2 | 0.20 | 0.02 | 0.026 | 0.057 | 0.083 | good | bad |
| Comp.Ex. 3 | 14.3 | 0.02 | 1.859 | 0.057 | 1.916 | good | good |

It can be understood from Table 2 that, in the case of having used the resin composition of Comparative Example 3, which does not have adequate non-adsorbency, even if a packaging bag is used that has non-adsorbency, adequate non-adsorbency is unable to be obtained for the packaging bag with fastener tape overall.

In contrast, in can be understood that, in the case of having used another resin composition having adequate non-adsorbency, when a packaging bag is used that has non-adsorbency, adequate non-adsorbency is obtained for the packaging bag with fastener tape overall.

REFERENCE SIGNS LIST

10 First strip-like member

12 Engageable portion

20 Second strip-like member

22 Engageable portion

100 Fastener tape

200 Non-adsorbent layer of packaging bag film

250 Sealing portion

300 Packaging bag

**Claims**

1. A fastener tape comprised of first and second strip-like members that can be mutually engaged; wherein the first and second strip-like members are composed with a resin composition containing an ethylene-vinyl alcohol copolymer and an acid-modified polyolefin-based resin.

2. The fastener tape according to claim 1, wherein the resin composition contains 65-95mass% of an ethylene-vinyl alcohol copolymer and 5-35mass% of an acid-modified polyolefin-based resin.

3. The fastener tape according to claim 1 or 2, wherein the content of ethylene monomer unit in the ethylene-vinyl alcohol copolymer is 10-70 mol% based on the total number of moles of the ethylene monomer unit and vinyl alcohol monomer unit in the entire ethylene-vinyl alcohol copolymer.

4. The fastener tape according to any one of claims 1 to 3, wherein the melt mass flow rate of the resin composition as determined in compliance with JIS K7210-1 is 1.0 g/10 min or more under conditions of a temperature of 260°C and load of 21.18 N.

5. The fastener tape according to any one of claims 1 to 4, wherein when the resin composition is molded into a film, cut to a size of 10 cm × 10 cm, one surface is exposed for one week to L-menthol vapor in an environment at 40°C, the adsorbed L-menthol is extracted with methyl ethyl ketone, and the amount of L-menthol in the extract is quantified by gas chromatography, the adsorbed amount of L-menthol in the film is 0.7 mg or less.

6. A packaging bag with fastener tape provided with:

   a packaging bag composed with a packaging bag film provided with a non-adsorbent layer, containing an ethylene-vinyl alcohol copolymer, for the innermost layer, and
   the fastener tape according to any one of claims 1 to 5 fused to the non-adsorbent layer so that the first and second strip-like members are mutually opposing.

7. A method for producing a packaging bag with fastener tape using:

   a fastener tape comprised of first and second strip-like members that can be mutually engaged, wherein the first and second strip-like members are composed with a resin composition containing an ethylene-vinyl alcohol copolymer and an acid-modified polyolefin-based resin, and
   a packaging bag film provided with a non-adsorbent layer containing an ethylene-vinyl alcohol copolymer, the method including:

      fusing the fastener tape to the non-adsorbent layer, and
      fusing the ends of the non-adsorbent layer by mutually opposing to form a bag such that the first and second strip-like members of the fastener tape are mutually opposing; wherein,
      when forming a bag by fusing the ends of the non-adsorbent layer by mutually opposing, at least a portion of the fastener tape is integrally fused and collapsed together with the ends of the non-adsorbent layer between the mutually opposing ends of the non-adsorbent layer.

# FIG. 1

(a)

(b)

# FIG. 2

(a)

(b)

# FIG. 3

(a)

(b)

(c)

(d)

## INTERNATIONAL SEARCH REPORT

| International application No. |
| --- |
| PCT/JP2018/034044 |

**A. CLASSIFICATION OF SUBJECT MATTER**
Int.Cl. A44B19/16(2006.01)i, B65D30/02(2006.01)i, B65D33/25(2006.01)i

According to International Patent Classification (IPC) or to both national classification and IPC

**B. FIELDS SEARCHED**

Minimum documentation searched (classification system followed by classification symbols)
Int.Cl. A44B19/00-19/64, B65D30/00-33/38

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 3-289401 A (KURARAY CO., LTD.) 19 December 1991, page 2, upper left column, line 14 to page 3, upper left column, line 18 (Family: none) | 1-7 |
| Y | JP 2013-28732 A (KYODO PRINTING CO., LTD.) 07 February 2013, paragraphs [0001], [0021]-[0030], [0055], table 1 (Family: none) | 1-7 |
| Y | JP 2012-158378 A (KURARAY CO., LTD., KURARAY TRADING CO. , LTD., FUJI TOKUSHU SHIGYO CO., LTD.) 23 August 2012, paragraphs [0028]-[0075], table 1, fig. 1 (Family: none) | 1-7 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 26 November 2018 (26.11.2018) | 04 December 2018 (04.12.2018) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

## INTERNATIONAL SEARCH REPORT

| | International application No. |
|---|---|
| | PCT/JP2018/034044 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 6-136206 A (MITSUBISHI KASEI CORP.) 17 May 1994, paragraphs [0001]-[0022] (Family: none) | 1-7 |
| A | JP 5-77841 A (KURARAY CO., LTD.) 30 March 1993 (Family: none) | 1-7 |
| A | WO 2016/148076 A1 (KYODO PRINTING CO., LTD.) 22 September 2016 & US 2018/0065342 A1 & EP 3269548 A1 & KR 10-2017-0116148 A & CN 107405899 A & TW 201702079 A | 1-7 |

Form PCT/ISA/210 (continuation of second sheet) (January 2015)

**EP 3 682 755 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3289401 A
- JP 2012158378 A
- JP H9278956 A

**18**